# EUROPÄISCHE PATENTSCHRIFT

(11) **EP 0 726 352 B1**
(45) Veröffentlichungstag und Bekanntmachung des Hinweises auf die Patenterteilung: **07.05.2003**
(21) Anmeldenummer: 96100202.9
(22) Anmeldetag: 09.01.1996
(51) Int. Cl.: D06P 5/00, D06P 5/08, D06P 5/13, D06P 5/15, C08G 18/08, C08G 18/28, C08G 18/78, C08G 18/80, D06B 11/00, D06L 1/12, D06L 3/10, D06P 1/22, D06P 1/52, D06P 1/54, D06P 1/607

(54) **Verfahren zur Herstellung von gemusterten Textilien**
Process for producing patterned textiles
Procédé de fabrication de textiles ayant des motifs

(30) Priorität: 16.01.1995 DE 19501055
(43) Veröffentlichungstag der Anmeldung: 14.08.1996
(73) Patentinhaber: BASF AKTIENGESELLSCHAFT, 67056 Ludwigshafen (DE)
(72) Erfinder: Häberle, Karl, Dr., D-67346 Speyer (DE); Fuchs, Horst, D-67259 Heuchelheim (DE); Reichert, Jürgen, Dr., D-67059 Ludwigshafen (DE); Bergmann, Klaus, D-67069 Ludwigshafen (DE)

(56) Entgegenhaltungen:
- DE-A- 1 619 670
- US-A- 5 556 935

## Beschreibung

Die vorliegende Erfindung betrifft ein Verfahren zur Herstellung von gemusterten Textilien, dadurch gekennzeichnet, dass man mit Küpenfarbstoffen gefärbte Baumwolltextilien oder baumwollhaltiges Material mit einem Farbhaltemittel bedruckt, das zusammengesetzt ist aus
0,5 bis 30 Gew.-%, vorzugsweise 1 bis 10 Gew.-% hydrophil modifiziertem Polyisocyanat,
5 bis 95 Gew.-%, vorzugsweise 8 bis 25 Gew.-%, bezogen auf den Polymergehalt, Polyacrylat und/oder Polyurethan als Bindemittel,
0,5 bis 10 Gew.-%, vorzugsweise 1 bis 7 Gew.-% übliches Verdickungsmittel,
0 bis 20 Gew.-%, vorzugsweise 0 bis 10 Gew.-% weitere übliche Hilfsmittel,
0 bis 90 Gew.-%, vorzugsweise 1 bis 85 Gew.-% Wasser und/oder inerte organische Lösemittel,
und anschließend durch Auswaschen des Farbstoffs an den nicht bedruckten Stellen das Muster erzeugt.

Zur Erzeugung von Mustern auf beispielsweise küpengefärbter Baumwolle geht man üblicherweise so vor, daß man entweder durch Aufdrucken eines Reservierungsmittels vor dem Färben (die reservierten Stellen lassen sich nicht anfärben) oder durch Herausätzen mittels einer Ätzpaste nach dem Färben und anschließendes Auswaschen der Ätzpaste das Muster erzeugt. Als Reservierungsmittel werden Druckpasten eingesetzt, die thermisch fixiert werden müssen und normalerweise formaldehydhaltig sind. Ätzpasten sind ebenfalls nachteilig, insbesondere weil sie meist stark alkalisch reagieren.

DE 16 19 670 offenbart ein Verfahren zum Bedrucken von Textilien im Transparentdruck, bei dem man wie folgt vorgeht: Ein gefärbtes oder ungefärbtes Textil wird mit einer klaren oder auch klar gefärbten, bindemittelfreien Lösung mit einer Viskosität von 9000 bis 29.000cP/25°C mustermäßig bedruckt.

An dieser Stelle entsteht eine durchscheinende Wirkung (Seite 3, letzte Zeile). Anschließend werden die nicht bedruckten Flächen gefärbt. In einem abschließenden Schritt trocknet man etwa 24 oder mehr Stunden, oder man heizt das Gewebe bei erhöhten Temperaturen nach, wobei als Temperaturen etwa 100 bis 200°C genannt sind.

Aufgabe der vorliegenden Anmeldung war es, ein Verfahren zur Herstellung von gemusterten Textilien bereitzustellen, welches aus Gründen der Verfahrensvereinfachung, Textilschonung, Energieeinsparung und Ökologie auf die für den Textildruck üblichen Reservierungsmittel und Ätzmittel verzichtet und ohne zusätzlichen Farbstoff auskommt.

Demgemäß wurde ein Verfahren zur Herstellung von gemusterten Textilien gefunden, welches dadurch gekennzeichnet ist, daß man gefärbtes Textilmaterial mit einem geeigneten Farbhaltemittel bedruckt und anschließend durch Auswaschen des Farbstoffes an den nicht bedruckten Stellen das Muster erzeugt.

Das erfindungsgemäße Verfahren ergibt insbesondere hervorragende Ergebnisse, wenn man als Farbhaltemittel hydrophil modifizierte Polyisocyanate zusammen mit geeigneten Bindemitteln verwendet.

In der DE-A 42 17 716 wird die Verwendung von Polyisocyanatgemischen mit einer mittleren NCO-Funktionalität von 1,8 bis 4,2 und einem Gehalt an (cyclo)aliphatisch gebundenen Isocyanatgruppen von 12,0 bis 21,5 Gew.-%, wobei diese Polyisocyanate auch hydrophil modifiziert sein können, als Vernetzer für in Textildruckpasten verwendete Bindemittel empfohlen.

Als Basis für die erfindungsgemäß verwendeten hydrophil modifizierten Polyisocyanate dienen übliche Diisocyanate und/oder übliche höher funktionelle Polyisocyanate mit einer mittleren NCO-Funktionalität von 2,0 bis 4,5. Diese Komponenten können alleine oder im Gemisch vorliegen.

Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)cyclohexan (Isophorondiisocyanat) oder 2,4- oder 2,6-Diisocyanato-1-methylcyclohexan sowie aromatische Diisocyanate wie 2,4- oder 2,6-Toluylendiisocyanat, Tetramethylxylylendiisocyanat, p-Xylylendiisocyanat, 2,4'- oder 4,4'-Diisocyanatodiphenylmethan, 1,3-oder 1,4-Phenylendiisocyanat, 1-Chlor-2,4-phenylencyanat, 4,4'-Diisocyanato-3,3'-dimethyldiphenyl, 3-Methyldiphenylmethan-4,4'-diisocyanat oder Diphenylether-4,4'-diisocyanat. Es können auch Gemische der genannten Diisocyanate vorliegen. Bevorzugt werden hiervon aliphatische Diisocyanate, insbesondere Hexamethylendiisocyanat und Isophorondiisocyanat.

Als übliche höher funktionelle Polyisocyanate eignen sich beispielsweise Triisocyanate wie 2,4,6-Triisocyanatotoluol oder 2,4,4-Triisocyanatodiphenylether oder die Gemische aus Di-, Tri- und höheren Polyisocyanaten, die durch Phosgenierung von entsprechenden Anilin/Formaldehyd-Kondensaten erhalten werden und Methylenbrücken aufweisende Polyphenylpolyisocyanate darstellen.

Von besonderem Interesse sind übliche aliphatische höher funktionelle Polyisocyanate der folgenden Gruppen:
(a) Isocyanuratgruppen aufweisende Polyisocyanate von aliphatischen und/oder cycloaliphatischen Diisocyanaten. Besonders bevorzugt sind hierbei die entsprechenden Isocyanato-Isocyanurate auf Basis von Hexamethylendiisocyanat und Isophorondiisocyanat. Bei den vorliegenden Isocyanuraten handelt es sich insbesondere um einfache Tris-isocyanatoalkyl- bzw. Trisisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-%, und eine mittlere NCO-Funktionalität von 2,6 bis 4,5.
(b) Uretdiondiisocyanate mit aliphatisch und/oder cycloaliphatisch gebundenen Isocyanatgruppen, vorzugsweise von Hexamethylendiisocyanat oder Isophorondiisocyanat abgeleitet. Bei Uretdiondiisocyanaten handelt es sich um cyclische Dimerisierungsprodukte von Diisocyanaten.
(c) Biuretgruppen aufweisende Polyisocyanate mit aliphatisch gebundenen Isocyanatgruppen, insbesondere Tris- (6-isocyanatohexyl)biuret oder dessen Gemische mit seinen höheren Homologen. Diese Biuretgruppen aufweisenden Polyisocyanate haben im allgemeinen einen NCO-Gehalt von 18 bis 25 Gew.-% und eine mittlere NCO-Funktionalität von 3 bis 4,5.
(d) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit einfachen mehrwertigen Alkoholen wie Trimethylolpropan, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
(e) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
(f) Uretonimin-modifizierte Polyisocyanate.

Für die erfindungsgemäße Verwendung werden aliphatische Diisocyanate und aliphatische höher funktionelle Polyisocyanate besonders bevorzugt.

Die beschriebenen Diisocyanate und/oder höher funktionalisierten Polyisocyanate werden zur Überführung in nicht-ionisch hydrophil modifizierte Polyisocyanate, die für die erfindungsgemäße Verwendung besonders bevorzugt werden, mit NCO-reaktiven Verbindungen umgesetzt, die hydrophil machende Strukturelemente mit nichtionischen Gruppen oder mit polaren Gruppen, die nicht in Ionengruppen übergeführt werden können, enthalten. Dabei liegt das Diisocyanat bzw. Polyisocyanat im stöchiometrischen Überschuß vor, damit das resultierende hydrophil modifizierte Polyisocyanat noch freie NCO-Gruppen aufweist.

Als solche NCO-reaktive Verbindungen mit hydrophil machenden Strukturelementen kommen vor allem hydroxylgruppenterminierte Polyether der allgemeinen Formel I

R¹-X-(AO)ₙ-H (I)

in der
- R¹: für C₁- bis C₂₀-Alkyl, insbesondere C₁- bis C₄-Alkyl, oder C₂- bis C₂₀-Alkenyl, Cyclopentyl, Cyclohexyl, Glycidyl, Oxetyl, Phenyl, Tolyl, Benzyl, Furfuryl oder Tetrahydrofurfuryl steht,
- X: Schwefel oder insbesondere Sauerstoff bezeichnet,
- A: Propylen oder vor allem Ethylen bedeutet, wobei auch insbesondere blockweise gemischt ethoxylierte und propoxylierte Verbindungen auftreten können, und
- n: für eine Zahl von 5 bis 120, insbesondere 10 bis 25 steht,
in Betracht.

Hierbei handelt es sich besonders bevorzugt um auf C₁- bis C₄-Alkanol gestartete Ethylenoxid- oder Propylenoxid-Polyether mit mittleren Molekulargewichten von 250 bis 7000, insbesondere 450 bis 1500.

Man kann aus den beschriebenen Diisocyanaten und/oder höher funktionalisierten Polyisocyanaten auch zuerst durch Umsetzung mit einem Unterschuß an hydroxylgruppenterminierten Polyestern, an anderen hydroxylgruppenterminierten Polyethern oder an Polyolen, z.B. Ethylenglykol, Trimethylolpropan oder Butandiol, Präpolymere erzeugen und diese Präpolymere dann anschließend oder auch gleichzeitig mit den Polyethern I im Unterschuß zu den hydrophil modifizierten Polyisocyanaten mit freien NCO- Gruppen umsetzen.

Es ist auch möglich, nicht-ionisch hydrophil modifizierte Polyisocyanate aus Diisocyanat bzw. Polyisocyanat und Polyalkylenglykolen der Formel HO-(AO)n-H, in der A und n die oben genannten Bedeutungen haben, herzustellen. Dabei reagieren beide endständigen OH-Gruppen des Polyalkylenglykols mit Isocyanat ab.

Die aufgezählten Arten nicht-ionisch hydrophil modifizierter Polyisocyanate sind in den Schriften DE-A 24 47 135, DE-A 26 10 552, DE-A 29 08 844, EP-A 013 112, EP-A 019 844, DE-A 40 36 927, DE-A 41 36 618, EP-B 206 059, EP-A 464 781 und EP-A 516 361 näher beschrieben.

Die beschriebenen Diisocyanate und/oder höher funktionalisierten Polyisocyanate werden zur Überführung in anionisch hydrophil modifizierte Polyisocyanate mit NCO-reaktiven Verbindungen umgesetzt, die hydrophil machende anionische Gruppen, insbesondere Säuregruppen wie Carboxylgruppen, Sulfonsäuregruppen oder Phosphonsäuregruppen, enthalten. Dabei liegt das Diisocyanat bzw. Polyisocyanat im stöchiometrischen Überschuß vor, damit das resultierende hydrophil modifizierte Polyisocyanat noch freie NCO-Gruppen aufweist.

Als solche NCO-reaktiven Verbindungen mit anionischen Gruppen kommen vor allem Hydroxycarbonsäuren wie 2-Hydroxyessigsäure, 3-Hydroxypropionsäure, 4-Hydroxybuttersäure oder Hydroxypivalinsäure und 2,2,2-Tris- sowie 2,2-Bis-(hydroxymethyl)alkansäuren, z.B. 2,2-Bis(hydroxymethyl)essigsäure, 2,2-Bis-(hydroxymethyl)propionsäure, 2,2-Bis-(hydroxymethyl)buttersäure oder 2,2,2-Tris(hydroxymethyl)essigsäure, in Betracht. Die Carboxylgruppen können teilweise oder vollständig durch eine Base neutralisiert sein, um in einer wasserlöslichen oder wasserdispergierbaren Form vorzuliegen. Als Base tritt hierbei vorzugsweise ein tertiäres Amin auf, welches bekanntermaßen gegenüber Isocyanat inert ist.

Die beschriebenen Diisocyanate und/oder höher funktionalisierten Polyisocyanate können auch mit einer Mischung aus nicht-ionisch hydrophil modifizierenden und anionisch hydrophil modifizierenden Verbindungen, welche nacheinander oder gleichzeitig zugegeben werden, umgesetzt werden, beispielsweise mit einem Unterschuß aus den Polyethern I und den beschriebenen Hydroxycarbonsäuren.

Die aufgezählten Arten anionisch hydrophil modifizierter Polyisocyanate sind in den Schriften DE-A 40 01 783, DE-A 41 13 160 und DE-A 41 42 275 näher beschrieben.

Die beschriebenen Diisocyanate und/oder höher funktionalisierten Polyisocyanate werden zur Überführung in kationisch hydrophil modifizierte Polyisocyanate mit NCO-reaktiven Verbindungen umgesetzt, die chemisch eingebaute alkylierbare oder protonierbare Funktionen unter Ausbildung eines kationischen Zentrums enthalten. Insbesondere sind solche Funktionen tertiäre Stickstoffatome, welche bekanntermaßen gegenüber Isocyanat inert sind und sich leicht quaternieren oder protonieren lassen. Bei der Umsetzung von Diisocyanat bzw. Polyisocyanat mit diesen NCO-reaktiven Verbindungen liegen erstere im Überschuß vor, damit das resultierende hydrophil modifizierte Polyisocyanat noch freie NCO-Gruppen aufweist.

Als derartige NCO-reaktive Verbindungen mit tertiären Stickstoffatomen kommen vorzugsweise Aminoalkohole der allgemeinen Formel II 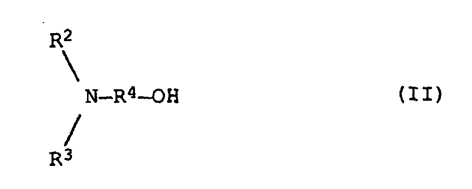 in der
- R² und R³: lineares oder verzweigtes C₁- bis C₂₀-Alkyl, insbesondere C₁- bis C₅-Alkyl, bedeuten oder zusammen mit dem N-Atom einen fünf- oder sechsgliedrigen Ring bilden, der noch ein O-Atom oder ein tertiäres N-Atom enthalten kann, insbesondere einen Piperidin-, Morpholin-, Piperazin-, Pyrrolidin-, Oxazolin- oder Dihydrooxazin-Ring, wobei die Reste R² und R³ noch zusätzlich Hydroxylgruppen, insbesondere jeweils eine Hydroxylgruppe, tragen können, und
- R⁴: eine C₂- bis C₁₀-Alkylengruppe, insbesondere eine C₂- bis C₆-Alkylengruppe, die linear oder verzweigt sein kann, bezeichnet,
in Betracht.

Als Aminoalkohole II eignen sich vor allem N-Methyldiethanolamin, N-Methyldi(iso)propanolamin, N-Butyldiethanolamin, N-Butyldi(iso)propanolamin, N-Stearyldiethanolamin, N-Stearyldi(iso)propanolamin, N,N-Dimethylethanolamin, N,N-Dimethyl(iso)propanolamin, N,N-Diethylethanolamin, N,N-Diethyl(iso)propanolamin, N,N-Dibutylethanolamin, N,N-Dibutyl(iso)propanolamin, Triethanolamin, Tri(iso)propanolamin, N-(2-Hydroxyethyl)morpholin, N-(2-Hydroxylpropyl)morpholin, N-(2-Hydroxyethyl)piperidin, N-(2-Hydroxypropyl)piperidin, N-Methyl-N'-(2-hydroxyethyl)piperazin, N-Methyl-N'-(2-hydroxypropyl)piperazin, N-Methyl-N'-(4-hydroxybutyl)piperazin, 2-Hydroxyethyl-oxazolin, 2-Hydroxypropyl-oxazolin, 3-Hydroxypropyl-oxazolin, 2-Hydroxyethyl-dihydrooxazin, 2-Hydroxypropyl-dihydrooxazin oder 3-Hydroxypropyl-dihydrooxazin.

Weiterhin kommen als derartige NCO-reaktive Verbindungen mit tertiären Stickstoffatomen vorzugsweise Diamine der allgemeinen Formel IIIa oder IIIb 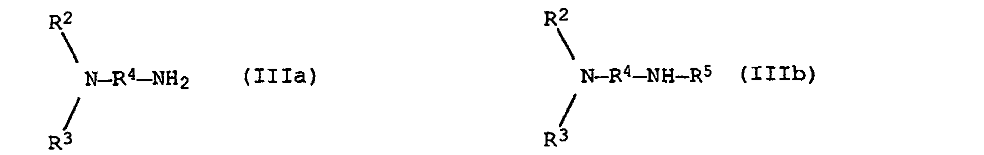 in der R² bis R⁴ die oben genannten Bedeutungen haben und R⁵ C₁bis C₅-Alkyl bezeichnet oder mit R² einen fünf- oder sechsgliedrigen Ring, insbesondere einen Piperazin-Ring, bildet, in Betracht.

Als Diamine IIIa eignen sich vor allem N,N-Dimethyl-ethylendiamin, N,N-Diethyl-ethylendiamin, N,N-Dimethyl-1,3-diamino-2,2-dimethylpropan, N,N-Diethyl-1,3-propylendiamin, N-(3-Aminopropyl)morpholin, N-(2-Aminopropyl)morpholin, N-(3-Aminopropyl)piperidin, N-(2-Aminopropyl)piperidin, 4-Amino-1-(N,N-diethylamino)pentan, 2-Amino-1-(N,N-dimethylamino)propan, 2-Amino-1-(N,N-diethylamino)propan oder 2-Amino-1- (N,N-dimethylamino)-2-methylpropan.

Als Diamine IIIb eignen sich vor allem N,N,N'-Trimethyl-ethylendiamin, N,N,N'-Triethyl-ethylendiamin, N-Methylpiperazin oder N-Ethylpiperazin.

Weiterhin können als NCO-reaktive Verbindungen auch Polyether(poly)ole mit eingebauten tertiären Stickstoffatomen, die durch Propoxylierung und/oder Ethoxylierung von Aminstickstoff aufweisenden Startermolekülen herstellbar sind, eingesetzt werden. Derartige Polyether(poly)ole sind beispielsweise die Propoxylierungs- und Ethoxylierungsprodukte von Ammoniak, Ethanolamin, Diethanolamin, Ethylendiamin oder N-Methylanilin.

Andere verwendbare NCO-reaktive Verbindungen sind tertiäre Stickstoffatome aufweisende Polyester- und Polyamidharze, tertiäre Stickstoffatome aufweisende urethangruppenhaltige Polyole sowie tertiäre Stickstoffatome aufweisende Polyhydroxypolyacrylate.

Die beschriebenen Diisocyanate und/oder höher funktionalisierten Polyisocyanate können auch mit einer Mischung aus nicht-ionisch hydrophil modifizierenden und kationisch hydrophil modifizierenden Verbindungen, welche nacheinander oder gleichzeitig zugegeben werden, umgesetzt werden, beispielsweise mit einem Unterschuß aus den Polyethern I und den Aminoalkoholen II oder den Diaminen IIIa bzw. IIIb. Auch Mischungen aus nichtionisch hydrophil modifizierenden und anionisch hydrophil modifizierenden Verbindungen sind möglich.

Die aufgezählten Arten kationisch hydrophil modifizierter Polyisocyanate sind in den Schriften DE-A 42 03 510 und EP-A 531 820 näher beschrieben.

Die beschriebenen hydrophil modifizierten Polyisocyanate können in die erfindungsgemäß einzusetzenden Druckpasten in unverdünnter Form oder in inerten organischen Lösungsmitteln gelöst eingearbeitet werden. Hierfür geeignete Lösungsmittel sind beispielsweise in der DE-A 35 21 618 und in der deutschen Patentanmeldung P 44 29 446.8 beschrieben. Insbesondere kommen als derartige inerte organische Lösungsmittel Ethylacetat, Aceton, Methylethylketon, Kohlensäureester wie Diethylcarbonat, 1,2-Ethylencarbonat oder 1,2-Proplyencarbonat sowie Lactone wie β-Propiolacton γ-Butyrolacton oder ε-Caprolacton in Betracht.

Als Bindemittel eignen sich insbesondere Polyacrylate oder Polyurethane oder Mischungen hieraus. Als Polyacrylate kommen hierbei beispielsweise Polyacrylsäuren, Polymethacrylsäuren, Copolymerisate aus Acryl- oder Methacrylsäure und Acryl- oder Methacrylsäureestern, Copolymerisate aus Acrylamid und Acrylsäure und Copolymerisate aus Acrylamid und Hydroxyalkylacrylaten in Betracht. Als Polyurethane kommen hierbei beispielsweise solche, wie sie in der DE-A 26 45 779 und der US-A 4 092 286 beschrieben sind, in Betracht. Die verwendeten Bindemittel werden üblicherweise als wäßrige Dispersionen eingesetzt.

Die erfindungsgemäß einzusetzenden Farbhaltemittel können darüber hinaus noch für Druckpasten übliche Hilfsmittel enthalten, so vor allem Verdickungsmittel, Netzmittel oder Konservierungsmittel.

Als Verdickungsmittel werden vorzugsweise solche eingesetzt, die elektrolytstabil und gut auswaschbar sind. Dabei können sowohl Verdickungsmittel auf natürlicher Basis, z.B. Alginate, als auch solche auf synthetischer Basis verwendet werden.

Die erfindungsgemäß einzusetzenden Farbhaltemittel liegen üblicherweise als farblose Druckpasten vor. Sie sind vorzugsweise wie folgt zusammengesetzt:
- 0,5 bis 30 Gew.-%,: vorzugsweise 1 bis 10 Gew.-% hydrophil modifiziertes Polyisocyanat
- 5 bis 95 Gew.-%,: vorzugsweise 8 bis 25 Gew.-%, bezogen auf den Polymergehalt, Polyacrylat und/oder Polyurethan als Bindemittel
- 0,5 bis 10 Gew.-%,: vorzugsweise 1 bis 7 Gew.-% übliches Verdikkungsmittel
- 0 bis 20 Gew.-%,: vorzugsweise 0 bis 10 Gew.-% weitere übliche Hilfsmittel
- 0 bis 90 Gew.-%,: vorzugsweise 1 bis 85 Gew.-% Wasser und/oder inerte organische Lösungsmittel.

Unter Textilien bzw. Textilmaterial sind hier sowohl Gewebe als auch daraus hergestellte Kleidungsstücke zu verstehen.

In einer bevorzugten Ausführungsform wird das erfindungsgemäße Verfahren bei mit Indigo gefärbtem Textilmaterial angewandt. Hierbei handelt es sich in der Regel um Baumwolltextilien (Denim). Aber auch auf mit anderen Küpenfarbstoffen gefärbten Textilien aus Baumwolle oder baumwollhaltigem Material können nach dem erfindungsgemäßen Verfahren mit hervorragenden Resultaten Muster erzeugt werden.

Das Auswaschen des Farbstoffes an den nicht bedruckten Stellen erfolgt vollständig oder teilweise, d.h. im letzten Fall tritt eine Aufhellung der Färbung gegenüber den bedruckten Stellen auf, so daß das Muster deutlich hervortritt. Je nach Grad des Auswaschens ist diese Aufhellung mehr oder weniger stark. Im Fall von mit Indigo gefärbten Baumwoll-Textilien wird eine Aufhellung der nicht bedruckten Stellen beispielsweise durch Waschen mit Steinen oder Sand erzeugt. Man kann das Auswaschen des Farbstoffes aber prinzipiell auch durch Behandlung mit Enzymen oder mit Reduktionsmitteln vornehmen, wobei hierbei eine vollständige Entfernung des Farbstoffes an den nicht bedruckten Stellen erfolgen kann.

Das Bedrucken des gefärbten Textilmaterials mit den beschriebenen Farbhaltemitteln, das Auswaschen des Farbstoffes und gegebenenfalls zwischen - oder nachgeschaltete Trockenschritte geschehen normalerweise in den üblichen Apparaturen und nach den üblichen Techniken.

Das erfindungsgemäße Verfahren erlaubt es, gemusterte Textilien, insbesondere mit Indigo gefärbte Baumwoll-Textilien, durch eine einfache, materialschonende und energiersparende Arbeitsweise herzustellen, denn es sind keine thermischen Fixierungsschritte notwendig. Das Textilmaterial braucht nur einmal eingefärbt zu werden, eine zusätzliche Farbstoffapplikation, etwa nach dem Bedrucken mit dem Farbhaltemittel, ist nicht erforderlich. Es war überraschend, daß die vorzugsweise eingesetzten Mischungen aus hydrophil modifizierten Polyisocyanaten und Bindemitteln selbst beim Waschen unter drastischer mechanische Beanspruchung (Steine, Sand) eine derartige Waschpermanenz aufweisen und den Farbstoff auf den bedruckten Stellen praktisch ohne Echtheitseinbußen halten.

### Beispiel

Durch Aufdrucken einer farblosen Druckpaste aus
3 Gew.-% eines nicht-ionisch hydrophil modifizierten Polyisocyanats, welches gemäß der unten angegebenen Vorschrift hergestellt wurde,
30 Gew.-% einer üblichen Polyurethan-Dispersion (40 gew.-%igen in Wasser) als Bindemittel (Perapret® PU der Fa. BASF Aktiengesellschaft) und
3 Gew.-% eines üblichen synthetischen Verdickungsmittels (Lutexal®-Marken der Fa. BASF Aktiengesellschaft)

### Rest: Wasser

wurde auf üblichem indigogefärbten Baumwollgewebe ein nicht sichtbares Muster erzeugt. Anschließend wurde das Gewebe in einem üblichen Stoneprozeß gewaschen. An den bedruckten Stellen blieb der originale Farbton erhalten, an den nicht bedruckten Stellen trat eine Aufhellung auf, so daß das Muster deutlich sichtbar wurde. Dabei war die Abgrenzung zwischen bedruckten und nicht bedruckten Stellen ausreichend scharf.

Das oben genannte nicht-ionisch hydrophil modifizierte Polyisocyanat war nach folgender Herstellvorschrift (gemäß Beispiel 8 der DE-A 40 36 927) erhalten werden:

Zu 150 g (0,3 mol) eines auf Methanol gestarteten, monofunktionellen Polyethylenoxid-Polyethers mit einem Molekulargewicht von 500 g/mol wurden bei 60°C 25 g (0,15 mol) Hexamethylendiisocyanat gegeben und 30 min gerührt. Nach dieser Zeit betrug der NCO-Gehalt < 0,05 Gew.-%. Dann wurde auf 30°C gekühlt und es wurden 900 g eines Biuretpolyisocyanats auf Basis von Hexamethylendiisocyanat, welches im wesentlichen aus N,N',N"-Tris(6-isocyanatohexyl)-biuret und dessen höheren Homologen bestand, mit einem NCO-Gehalt von 21,9 %, einem Gehalt an monomerem Hexamethylendiisocyanat von weniger als 0,5 Gew.-%, einer Viskosität bei 23°C von 2,9 Pa·s und einer mittleren NCO-Funktionalität von 3,3 eingerührt. Nach Abkühlen erhielt man ein klares Harz mit einem NCO-Gehalt von 18,1 Gew.-% und einer Viskosität bei 23°C von 3900 mPa·s.

## Patentansprüche

1. Verfahren zur Herstellung von gemusterten Textilien, **dadurch gekennzeichnet, dass** man mit Küpenfarbstoffen gefärbte Baumwolltextilien oder baumwollhaltiges Material mit einem Farbhaltemittel bedruckt, das zusammengesetzt ist aus
0,5 bis 30 Gew.-%, vorzugsweise 1 bis 10 Gew.-% hydrophil modifiziertem Polyisocyanat,
5 bis 95 Gew.-%, vorzugsweise 8 bis 25 Gew.-%, bezogen auf den Polymergehalt, Polyacrylat und/oder Polyurethan als Bindemittel,
0,5 bis 10 Gew.-%, vorzugsweise 1 bis 7 Gew.-% übliches Verdickungsmittel,
0 bis 20 Gew.-%, vorzugsweise 0 bis 10 Gew.-% weitere übliche Hilfsmittel,
0 bis 90 Gew.-%, vorzugsweise 1 bis 85 Gew.-% Wasser und/oder inerte organische Lösemittel,
und anschließend durch Auswaschen des Farbstoffs an den nicht bedruckten Stellen das Muster erzeugt.

2. Verfahren zur Herstellung von gemusterten Textilien nach Anspruch 1, **dadurch gekennzeichnet, dass** man nicht-ionisch hydrophil modifizierte Polyisocyanate einsetzt.

3. Verfahren zur Herstellung von gemusterten Textilien nach Anspruch 2, **dadurch gekennzeichnet, dass** man nicht-ionisch hydrophil modifizierte Polyisocyanate einsetzt, welche hydroxylgruppenterminierte Polyether der allgemeinen Formel I
R¹-X-(AO)ₙ-H (I)
eingebaut enthalten, wobei
R¹ für C₁- bis C₂₀-Alkyl oder C₂- bis C₂₀-Alkenyl, Cyclopentyl, Cyclohexyl, Glycidyl, Oxetyl, Phenyl, Tolyl, Benzyl, Furfuryl oder Tetrahydrofurfuryl steht,
X Schwefel oder Sauerstoff bezeichnet,
A Propylen oder Ethylen bedeutet und
n für eine Zahl von 5 bis 120 steht.

4. Verfahren zur Herstellung von gemusterten Textilien nach den Ansprüchen 1 bis 3, **dadurch gekennzeichnet, dass** man hydrophil modifizierte Polyisocyanate auf Basis von aliphatischen Diisocyanaten und aliphatisch höher funktionalisierten Polyisocyanaten einsetzt.

5. Verfahren zur Herstellung von gemusterten Textilien nach den Ansprüchen 1 bis 4, **dadurch gekennzeichnet, dass** es sich bei den mit Küpenfarbstoffen gefärbten Baumwolltextilien oder baumwollhaltigen Material um mit Indigo gefärbte Baumwolltextilien (Denim) handelt.

## Claims

1. A process for producing patterned textiles, **characterized in that** vat-dyed cotton textiles or cotton-containing material is printed with a color preserver which is composed of
0.5 to 30% by weight, preferably 1 to 10% by weight, of hydrophilic modified polyisocyanate,
5 to 95% by weight, preferably 8 to 25% by weight, based on the polymer content, of polyacrylate and/or polyurethane as binder,
0.5 to 10% by weight, preferably 1 to 7% by weight, of customary thickener,
0 to 20% by weight, preferably 0 to 10% by weight, of further customary auxiliaries,
0 to 90% by weight, preferably 1 to 85% by weight, of water and/or inert organic solvents,
and then the dye is washed out of the unprinted areas to produce the pattern.

2. A process as claimed in claim 1, **characterized in that** the hydrophilic modified polyisocyanate used is nonionic.

3. A process as claimed in claim 2, **characterized in that** the nonionic hydrophilic modified polyisocyanate used contains, as built-in units, hydroxyl-terminated polyethers of the general formula I
R¹-X-(AO)ₙ-H (I)
in which
R¹ is C₁-C₂₀-alkyl or C₂-C₂₀-alkenyl, cyclopentyl, cyclohexyl, glycidyl, oxethyl, phenyl, tolyl, benzyl, furfuryl or tetrahydrofurfuryl,
X is sulfur or oxygen,
A is propylene or ethylene, and
n is from 5 to 120.

4. A process as claimed in any of claims 1 to 3, **characterized in that** the hydrophilic modified polyisocyanate used is based on an aliphatic diisocyanate and an aliphatic higher functionalized polyisocyanate.

5. A process as claimed in any of claims 1 to 4, **characterized in that** the vat-dyed cotton textiles or cotton-containing material are indigo-dyed cotton textiles (denim).

## Revendications

1. Procédé de fabrication de textiles à motifs, **caractérisé en ce que** l'on imprime des tissus de coton ou une matière contenant du coton teintés avec des colorants de cuve avec un conservateur de colorant composé de :
- un polyisocyanate à modification hydrophile, à raison de 0,5% à 30% en poids, de préférence à raison de 1% à 10% en poids ;
- un polyacrylate et/ou un polyuréthanne en tant que liant, à raison de 5% à 95% en poids, de préférence à raison de 8% à 25% en poids, par rapport à la quantité de polymère ;
- un épaississant classique, à raison de 0,5% à 10% en poids, de préférence à raison de 1% à 7% en poids ;
- un auxiliaire classique supplémentaire, à raison de 0% à 20% en poids, de préférence à raison de 0% à 10% en poids ;
- eau et/ou un solvant organique inerte, à raison de 0% à 90% en poids, de préférence à raison de 1% à 85% en poids ;
puis **en ce que** l'on produit le motif par lavage du colorant aux emplacements non imprimés.

2. Procédé de fabrication de textiles à motifs selon la revendication 1, **caractérisé en ce que** l'on met en oeuvre des polyisocyanates à modification hydrophile non ioniques.

3. Procédé de fabrication de textiles à motifs selon la revendication 2, **caractérisé en ce que** l'on met en oeuvre des polyisocyanates à modification hydrophile non ioniques, lesquels contiennent de manière intégrée, un polyéther à terminaison hydroxyle de formule générale I
R¹-X-(AO)ₙ-H (I)
où
R¹ représente un groupe alkyle en C₁ à C₂₀ ou alcényle en C₂ à C₂₀, cyclopentyle, cyclohexyle, glycidyle, éthoxy, phényle, tolyle, benzyle, furfuryle ou tétrahydrofurfuryle,
X désigne un atome de soufre ou d'oxygène,
A représente un groupe propylène ou éthylène et
n représente un nombre de 5 à 120.

4. Procédé de fabrication de textiles à motifs selon les revendications 1 à 3, **caractérisé en ce que** l'on met en oeuvre des polyisocyanates à modification hydrophile à base de diisocyanates aliphatiques et de polyisocyanates aliphatiques de fonctionnalité supérieure.

5. Procédé de fabrication de textiles à motifs selon les revendications 1 à 4, **caractérisé en ce que** les textiles de coton ou la matière contenant du coton sont des textiles de coton teintés avec des colorants de cuve teintés avec de l'indigo (Denim).
